# FASCICULE DE BREVET EUROPEEN

(11) **EP 0 633 457 B1**
(45) Date de publication et mention de la délivrance du brevet: **06.08.1997**
(21) Numéro de dépôt: 94401413.3
(22) Date de dépôt: 23.06.1994
(51) Int. Cl.: G01J 1/46, G01J 1/16, G01S 3/784, G01S 17/10, H04B 10/158

(54) **Elément photosensible et dispositif pour la détection d'impulsions lumineuses**
Fotoelement und Vorrichtung zur Detektion von Lichtpulsen
Photosensitive element and apparatus for the detection of light pulses

(30) Priorité: 05.07.1993 FR 9308203
(43) Date de publication de la demande: 11.01.1995
(73) Titulaire: AEROSPATIALE Société Nationale Industrielle, 75781 Paris Cédex 16 (FR)
(72) Inventeur: Merle, Jean-Pierre, F-91400 Orsay (FR); Devos, Francis, F-91620 La Ville du Bois (FR)
(74) Mandataire: Bonnetat, Christian

(56) Documents cités:
- EP-A- 0 075 767
- EP-A- 0 519 105
- DE-A- 3 429 943
- FR-A- 2 583 523
- US-A- 5 216 259
- PATENT ABSTRACTS OF JAPAN vol. 7, no. 130 (P-202) (1275) 7 Juin 1983 & JP-A-58 047 227 (AKIHITO AZETSU) 18 Mars 1983.

## Description

La présente invention concerne un élément photosensible pour la détection d'éclats lumineux, ainsi qu'un détecteur comportant une pluralité de tels éléments photosensibles. Elle concerne également des dispositifs de localisation et d'analyse de sources lumineuses munis de tels détecteurs.

On connaît déjà des dispositifs pour détecter des sources lumineuses comportant une pluralité d'éléments photosensibles susceptibles d'engendrer des signaux caractéristiques d'une source lumineuse, lors de la détection d'une telle source.

L'inconvénient majeur de la mise en oeuvre de tels dispositifs provient de la présence, en plus des éclats lumineux émis par une source que l'on souhaite détecter, de nombreux faisceaux et éclats lumineux qui forment un bruit de fond lumineux et qui éclairent également lesdits dispositifs.

Ce bruit de fond rend souvent très difficile la détection des éclats lumineux recherchés.

Il peut même arriver que le bruit soit tellement important qu'il couvre presque entièrement le signal lumineux que l'on souhaite détecter.

On remarquera que le document FR-A-2 583 523, qui divulgue un système comportant des éléments photosensibles agencés en lignes et colonnes sous forme de matrice, pour la localisation d'un mobile émettant des éclats lumineux, prévoit, pour remédier à cet inconvénient, d'associer audit système un dispositif de comparaison. Ce dispositif de comparaison permet d'enregistrer le bruit de fond, soit juste avant, soit juste après la détection, et de soustraire ce bruit de fond enregistré au signal détecté contenant les éclats lumineux recherchés.

Toutefois, la fréquence de détection est réduite pour ce système. En effet, chaque durée de détection exige une durée identique pour l'enregistrement du bruit de fond devant être soustrait et le temps de soustraction est long, car cette soustraction n'est pas intégrée à la détection et elle n'est effectuée qu'après la lecture des images.

Par ailleurs, par le document DE-A-34 29 943, on connaît un élément photosensible pour la détection d'éclats lumineux, comportant une capacité d'accumulation, une diode photosensible susceptible de transformer l'énergie lumineuse en courant électrique, et un dispositif de commande, connaissant l'instant de l'émission des éclats lumineux et susceptible de commuter ledit élément photosensible dans l'un ou l'autre de deux états différents :
- un état d'accumulation positive, activé au moins pendant la durée d'émission des éclats lumineux, dans lequel la capacité d'accumulation est chargée, à partir du courant électrique engendré par l'énergie lumineuse atteignant ledit élément photosensible ; et
- un état d'accumulation négative, dans lequel la capacité d'accumulation est déchargée, à partir du courant électrique engendré par l'énergie lumineuse atteignant ledit élément photosensible.

Ainsi, cet élément photosensible connu est susceptible soit d'intégrer les signaux lumineux qui l'éclairent et en particulier les éclats lumineux que l'on souhaite détecter, soit de soustraire ces signaux lumineux, en fonction de l'état dans lequel il est commuté.

Toutefois, cet élément photosensible connu présente l'inconvénient de nécessiter un dispositif de commande complexe.

L'objet de la présente invention est de permettre de réaliser un élément photosensible de ce type, pourvu d'un dispositif de commande simple.

A cette fin, selon l'invention, l'élément photosensible du type décrit ci-dessus est caractérisé en ce qu'il comporte une seconde diode photosensible et un système de commutation, commandé par ledit dispositif de commande et susceptible de relier la capacité d'accumulation, d'une part, à l'une desdites diodes photosensibles dans l'état d'accumulation positive et, d'autre part, à l'autre desdites diodes photosensibles dans l'état d'accumulation négative.

Ainsi, les états d'accumulation positive et d'accumulation négative sont obtenus par deux branchements différents, par rapport à la capacité d'accumulation des deux diodes photosensibles. Topologiquement, lesdites diodes photosensibles (qui sont avantageusement réalisées selon les techniques des circuits intégrés) sont agencées de manière à pouvoir être assimilées à un même point, de la taille d'un pixel de lumière, permettant ainsi de détecter les mêmes éclats lumineux.

De façon avantageuse, les états successifs d'accumulation positive et d'accumulation négative sont de durées égales. Ainsi, si ces durées sont très courtes, de sorte que le bruit de fond peut être supposé constant dans deux états successifs, ce bruit de fond est éliminé. En effet, pendant la phase d'accumulation positive, l'élément photosensible intègre le bruit de fond et les éventuels éclats lumineux synchrones et, pendant la phase d'accumulation négative, il soustrait le seul bruit de fond, de même intensité, ne retenant ainsi que lesdits éclats lumineux, et ceci quelle que soit l'intensité de ce bruit de fond.

On remarquera que la commutation entre l'état d'accumulation négative et l'état d'accumulation positive, peut ne pas être binaire, ce qui permet une véritable corrélation temporelle analogique.

De façon avantageuse, ledit élément photosensible comporte un système de binarisation permettant de déterminer un état binaire dudit élément photosensible, en fonction de la tension aux bornes de la capacité d'accumulation par rapport à une tension de référence.

Ainsi, on peut choisir, par exemple en fonction de la durée des états d'accumulation, une tension de référence, correspondant à un faisceau lumineux détecté d'énergie déterminée, à partir de laquelle l'élément photosensible change d'état binaire et signale ainsi une détection d'éclats lumineux.

Par ailleurs, ledit élément photosensible comporte, avantageusement, un moyen de mémorisation permettant d'enregistrer ledit état binaire déterminé.

De façon avantageuse, ledit élément photosensible comporte également un système d'initialisation, susceptible d'engendrer une tension déterminée aux bornes de la capacité d'accumulation.

Ainsi, on peut, à tout moment et en particulier avant la détection, mettre l'élément photosensible, au choix, dans l'un ou l'autre de ses deux états binaires.

La présente invention concerne également un détecteur photosensible qui est remarquable en ce qu'il comporte des éléments photosensibles, conformes à l'invention et agencés en lignes et colonnes sous forme de matrice.

De façon avantageuse, ledit détecteur photosensible comporte un registre à décalage d'entrée susceptible de commander l'ensemble des systèmes d'initialisation desdits éléments photosensibles.

Ainsi, au moyen de ce registre à décalage d'entrée, l'ensemble des éléments photosensibles constituant ledit détecteur peuvent être mis dans l'un quelconque de leurs deux états binaires.

Avantageusement, ledit détecteur photosensible comporte également un registre à décalage de sortie susceptible de déterminer l'état binaire de chacun des éléments photosensibles du détecteur, c'est-à-dire de restituer une image prise par le détecteur photosensible.

Par ailleurs, l'élément photosensible est muni, de façon avantageuse, d'un système de comparaison permettant de détecter tout changement de l'état binaire d'un élément photosensible entre une image détectée et une image enregistrée.

Ladite image enregistrée peut correspondre à une image détectée à un instant antérieur, permettant ainsi de comparer par exemple deux images successives et de déduire, soit l'activation d'un nouvel élément photosensible du détecteur, soit la fin d'une activation antérieure. Ladite image enregistrée peut également être une image de référence prédéterminée ne provenant pas d'une détection antérieure.

Par ailleurs, la présente invention concerne différentes applications pratiques utilisant un détecteur tel que celui décrit précédemment.

Une première application peut concerner un dispositif de localisation d'au moins une source lumineuse impulsionnelle.

Ledit dispositif de localisation est remarquable, selon l'invention, en ce qu'il comporte un détecteur photosensible conforme à l'invention, ladite source impulsionnelle étant localisée angulairement, par rapport à une direction normale au plan dudit détecteur, par la position dans ledit détecteur de l'élément photosensible activé par ladite source impulsionnelle.

Ce dispositif de localisation est semblable à celui décrit dans le document FR-A-2 583 523 précité, mais il est perfectionné par le détecteur conforme à l'invention, permettant ainsi d'éliminer efficacement le bruit de fond, notamment par une accumulation de nombreux éclats lumineux.

Afin de pouvoir localiser plusieurs sources impulsionnelles différentes, ce dispositif de localisation peut être remarquable, selon l'invention, en ce qu'il est susceptible de décoder un signal caractéristique de chacune desdites sources impulsionnelles, chacun desdits signaux caractéristiques étant formé, de façon unique, par une répartition déterminée d'éclats et d'absence d'éclats.

Une deuxième application peut concerner un dispositif de télémétrie destiné à vérifier la présence d'un objet à.une distance déterminée dudit dispositif.

A cet effet, ledit dispositif comporte :
- une source laser, susceptible d'émettre des éclats lumineux, et
- un détecteur photosensible conforme à l'invention, susceptible d'effectuer la détection des éclats lumineux émis par ladite source et réfléchis par ledit objet, ladite détection étant effectuée, à un instant déterminé après l'émission des éclats lumineux, par la commutation dans l'état d'accumulation positive à cet instant de tous les éléments photosensibles dudit détecteur.

Ainsi, afin de savoir si un objet se trouve à une distance déterminée, on effectue la détection au bout d'un temps défini après l'émission des éclats, correspondant à la durée nécessaire à la lumière pour atteindre un objet se trouvant à ladite distance et pour revenir jusqu'au dispositif après réflexion sur cet objet. La détection effective ou non d'un signal lumineux permet alors de conclure à la présence ou non d'un objet à cette distance du dispositif.

De plus, l'utilisation d'un détecteur photosensible conforme à l'invention permet de réduire le bruit de fond, lors de cette détection, par l'accumulation sélective de nombreux éclats lumineux successifs.

Les figures du dessin annexé feront bien comprendre comment l'invention peut être réalisée. Sur ces figures, des références identiques désignent des éléments semblables.

La figure 1 montre schématiquement un exemple de réalisation de l'élément photosensible conforme à l'invention.

La figure 2 illustre la variation de la tension aux bornes de la capacité d'accumulation d'un élément photosensible, pour un signal lumineux d'intensité constante.

La figure 3 illustre la variation de la tension aux bornes de la capacité d'accumulation d'un élément photosensible, pour un signal lumineux comportant des éclats lumineux engendrés lors des états d'accumulation positive.

La figure 4 montre, de façon schématique, les liaisons entre un élément photosensible et des dispositifs associés audit élément photosensible.

La figure 5 illustre un détecteur photosensible comportant des éléments photosensibles agencés en lignes et colonnes sous forme de matrice.

La figure 6 montre, de façon schématique, un dispositif de localisation d'une source lumineuse impulsionnelle mobile.

La figure 7 illustre, de façon schématique, un dispositif de télémétrie.

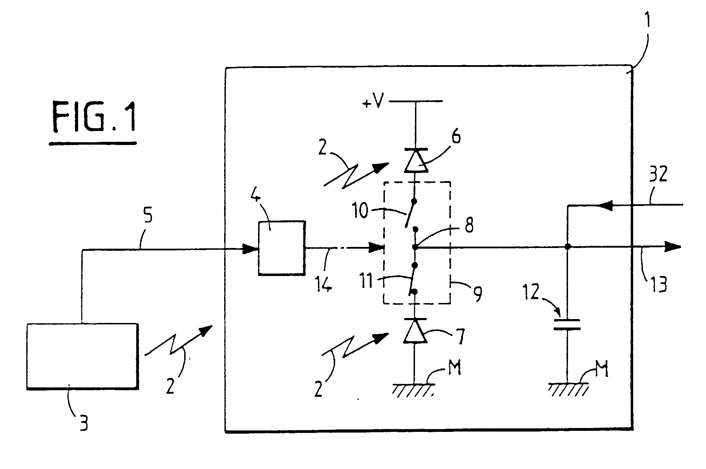

L'élément photosensible 1, conforme à l'invention et représenté sur la figure 1, est destiné à détecter des éclats lumineux 2 émis par une source lumineuse 3. A cet effet, il comporte un dispositif de commande 4, relié par l'intermédiaire d'une liaison 5 à la source lumineuse 3 et connaissant l'instant d'émission desdits éclats lumineux 2.

Selon l'exemple de réalisation de la figure 1, ledit élément photosensible 1 comporte deux diodes photosensibles 6 et 7 montées en série et présentant un point commun 8. La cathode de l'une 6 desdites diodes est par ailleurs reliée à une tension positive +V et l'anode de l'autre 7 desdites diodes est reliée à la masse M. Ces diodes photosensibles 6 et 7 sont susceptibles de transformer en courant électrique l'énergie lumineuse des faisceaux qui les éclairent et elles deviennent ainsi passantes lorsqu'elles sont éclairées.

L'élément photosensible 1 est, par ailleurs, muni d'un système de commutation 9 comportant deux interrupteurs 10 et 11, dont l'un 10 est agencé entre la diode 6 et ledit point commun 8 et dont l'autre 11 est agencé entre la diode 7 et ce même point commun 8.

En outre, une capacité d'accumulation 12 est agencée entre ce point commun 8 et la masse M. La tension aux bornes de cette capacité d'accumulation 12, qui est représentative du signal lumineux détecté comme on le verra ci-après, peut être mesurée à partir d'une liaison 13.

Le système de commutation 9, qui est commandé par le dispositif de commande 4 par l'intermédiaire d'une liaison 14, peut commuter l'élément photosensible 1 dans deux états différents :
- un état d'accumulation positive AP, pour lequel l'interrupteur 10 est fermé et l'interrupteur 11 est ouvert et dans lequel la capacité d'accumulation 12 est reliée à la tension positive +V par l'intermédiaire de la diode 6 ; et
- un état d'accumulation négative AN, pour lequel l'interrupteur 10 est ouvert et l'interrupteur 11 est fermé, tel que représenté sur la figure 1, et dans lequel la capacité d'accumulation 12 est uniquement reliée à la diode 7.

Dans l'état d'accumulation positive AP, lorsque la diode 6 est éclairée, la capacité d'accumulation 12 qui est reliée à la tension positive +V se charge, à partir du courant engendré par ladite diode photosensible 6.

Dans l'état d'accumulation négative AN, la capacité d'accumulation 12 est reliée, par l'intermédiaire de la diode photosensible 7, à la masse M et elle se décharge en fonction du courant engendré par ladite diode photosensible 7 éclairée.

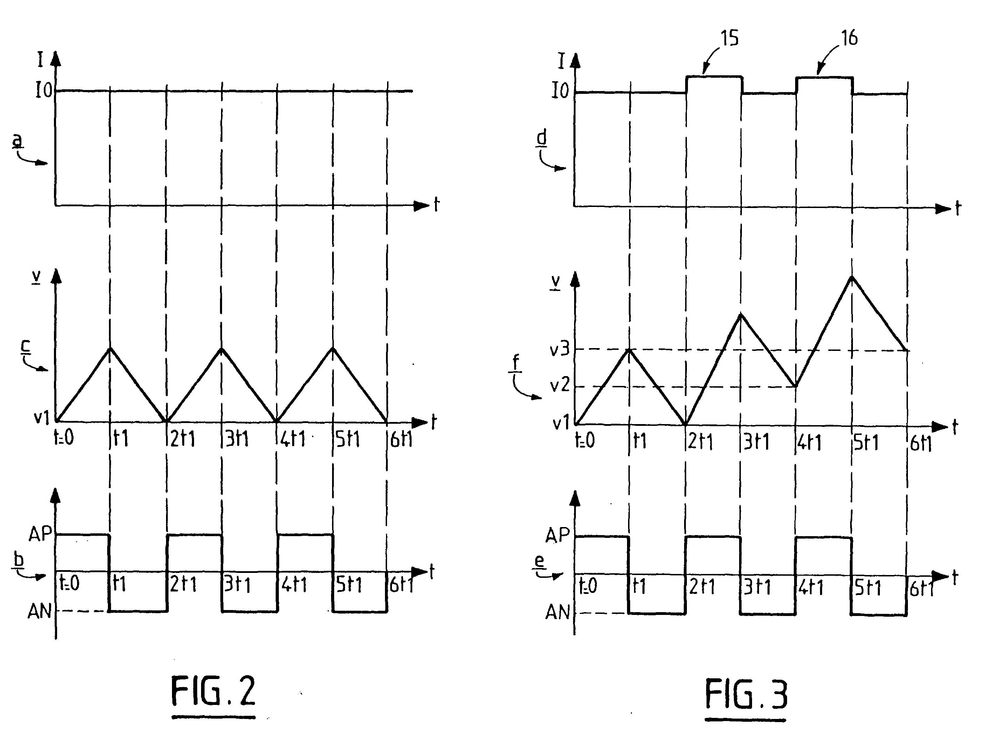

On explique ci-après la prise en compte d'un signal lumineux par ledit élément photosensible 1 en se référant, d'une part, tel que représenté sur la figure 2, à une intensité lumineuse constante formant un bruit de fond lumineux et, d'autre part, tel que représenté sur la figure 3, à une intensité lumineuse comportant de plus des éclats lumineux ajoutés audit bruit de fond.

Sur la figure 2, on a représenté trois schémas a, b et c, comportant une même base de temps et illustrant la variation de charge de la capacité d'accumulation 12, c'est-à-dire la variation de tension à la borne de celle-ci, en fonction de l'état d'accumulation AP ou AN, lorsque l'éclairement lumineux est continu et constant.

Le schéma a montre la variation de l'intensité lumineuse I atteignant le détecteur optique 1 en fonction du temps t. Cette intensité lumineuse est supposée constante de valeur I0.

Le schéma b montre les différents états d'accumulation positive AP et d'accumulation négative AN successifs, chacun de ces états présentant une même durée t1.

Le schéma c illustre, quant à lui, la tension v aux bornes de la capacité d'accumulation 12, c'est-à-dire le signal utile restitué par l'élément photosensible 1. Ainsi, grâce à la périodicité des commutations successives, le signal intégré pendant la phase d'accumulation positive AP est à chaque fois soustrait lors de la phase d'accumulation négative AN, la tension v ayant ainsi aux différents temps 2nt1 (où n est un entier) la même valeur v1 qu'au temps t = 0.

Ceci permet d'éliminer le bruit de fond lorsque celui-ci est constant pendant la durée d'une accumulation positive et de l'accumulation négative suivante.

La tension v1 est en principe nulle, mais dans certaines applications il est possible de lui affecter une valeur non nulle, comme on le verra ci-après.

Sur la figure 3, on a représenté trois schémas d, e et f identiques aux schémas a, b et c de la figure 2, mais dans le cas où, en plus d'un bruit de fond lumineux d'intensité constante I0, l'élément photosensible 1 est éclairé par des éclats lumineux 2, la contribution de ces éclats 2 dans l'intensité I étant représentée par les paliers 15 et 16 sur le schéma d.

Le système de commande 4, qui connaît l'instant de l'émission des éclats lumineux 2, par l'intermédiaire de la liaison 5 ou par un autre moyen (non représenté), commute l'élément photosensible 1, à chaque émission d'un éclat lumineux 2, dans l'état d'accumulation positive AP, tel que représenté par les schémas d et e de la figure 3.

Ladite liaison 5 entre le système de commande 4 et la source lumineuse 3 peut être une liaison physique, par exemple sous la forme d'un fil électrique, ou une liaison hertzienne ou optique. Le système de commande 4 et la source 3 peuvent également être reliés à des horloges respectives accordées en temps.

Ainsi, dans la situation de la figure 3, le courant électrique engendré par le bruit de fond, qui charge la capacité d'accumulation pendant l'état d'accumulation positive AP, la décharge pendant l'état d'accumulation négative AN, permettant d'annihiler ce bruit de fond comme dans l'exemple de la figure 2.

Au contraire, grâce à la synchronisation de l'état d'accumulation positive AP avec l'émission des éclats lumineux 2, l'intensité lumineuse provenant desdits éclats lumineux est seulement intégrée pendant la phase d'accumulation positive AP, et elle n'est pas soustraite pendant la phase d'accumulation négative AN. Ainsi, la tension v aux bornes de la capacité d'accumulation 12 augmente au cours du temps t en fonction de l'intensité et du nombre desdits éclats lumineux 2 intégrés. L'intégration du palier 15 entraîne une augmentation de la tension v de v1 à v2 et l'intégration du palier 16 une augmentation de la tension v de v2 à v3.

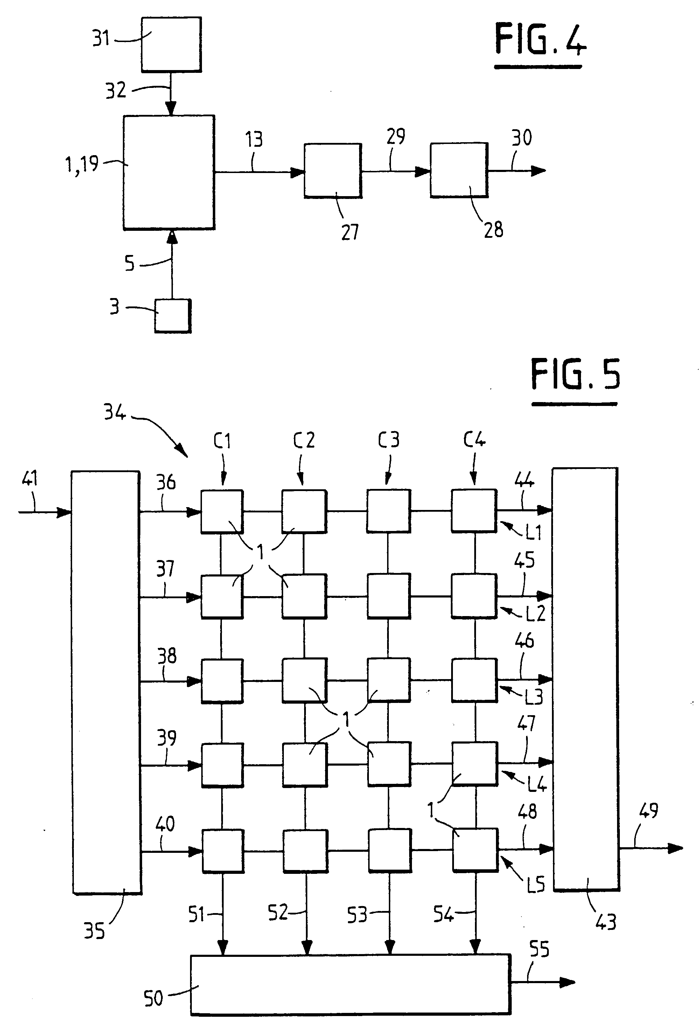

Ledit élément photosensible 1 est relié par la liaison 13 à un système de binarisation 27, tel que représenté sur la figure 4.

Ce système de binarisation 27 compare la tension v aux bornes de la capacité d'accumulation 12 à une tension de référence vo et attribue, en fonction du résultat, un état binaire 0 (si v est inférieure à vo) ou 1 (si v est supérieure à vo) audit élément photosensible 1. Cet état binaire peut être enregistré par un moyen de mémorisation 28 relié audit système de binarisation 27 par une liaison 29. Ledit moyen de mémorisation 28 peut transmettre le résultat enregistré par l'intermédiaire d'une liaison 30.

Par ailleurs, un système d'initialisation 31 relié audit élément photosensible 1 par une liaison 32 permet de précharger la capacité d'accumulation 12, c'est-à-dire qu'il est susceptible de donner une valeur déterminée à la tension initiale v1 mesurée aux bornes de la capacité d'accumulation 12.

Ce système d'initialisation 31 permet, en particulier, d'engendrer une tension v1 supérieure à la tension de référence vo, de sorte que l'élément photosensible se trouve dans l'état 1 avant la détection.

La présente invention concerne également un détecteur photosensible 34, tel que représenté sur la figure 5, comportant des éléments photosensibles 1 agencés sous forme de matrice.

Lesdits éléments photosensibles 1 sont reliés entre eux en lignes L1, L2, L3, L4, L5 et en colonnes C1, C2, C3, C4.

Ledit détecteur 34 comporte un registre à décalage d'entrée 35, relié aux lignes L1, L2, L3, L4 et L5 par des liaisons 36, 37, 38, 39 et 40 et permettant de commander le système d'initialisation 31 de chacun des éléments photosensibles 1 du détecteur 34 à partir d'une entrée 41. Ainsi, avant une détection, chacun des éléments photosensibles 1 peut être mis au choix dans l'un de ses états binaires 0 ou 1.

Ledit détecteur 34 comporte également un registre à décalage de sortie 43, relié aux lignes L1, L2, L3, L4 et L5 par des liaisons 44, 45, 46, 47 et 48 et permettant de communiquer, par une sortie 49, ligne par ligne, l'état binaire de chacun des éléments photosensibles 1. Il permet, par conséquent, de restituer une image prise par le détecteur photosensible 34. Cette opération de restitution d'image peut être effectuée, simultanément, avec une nouvelle prise d'image, c'est-à-dire avec une nouvelle intégration de signaux lumineux.

Par ailleurs, un système de comparaison 50, relié aux colonnes C1, C2, C3 et C4 du détecteur photosensible 34 par des liaisons 51, 52, 53 et 54, permet de détecter et de communiquer par une sortie 55 tout changement de l'état binaire d'un des éléments photosensibles 1 entre une image détectée et une image enregistrée. Ce système de comparaison 50 réalise donc une fonction de OU-global commune à tous les éléments photosensibles du détecteur. Cette image enregistrée peut être une image détectée antérieurement ou une image de référence préenregistrée.

Le détecteur photosensible représenté sur la figure 5 peut être utilisé dans de nombreux dispositifs optoélectroniques, en particulier des dispositifs de surveillance et de localisation de sources lumineuses. A titre d'exemple, on décrit ci-après quelques applications possibles de ce détecteur photosensible.

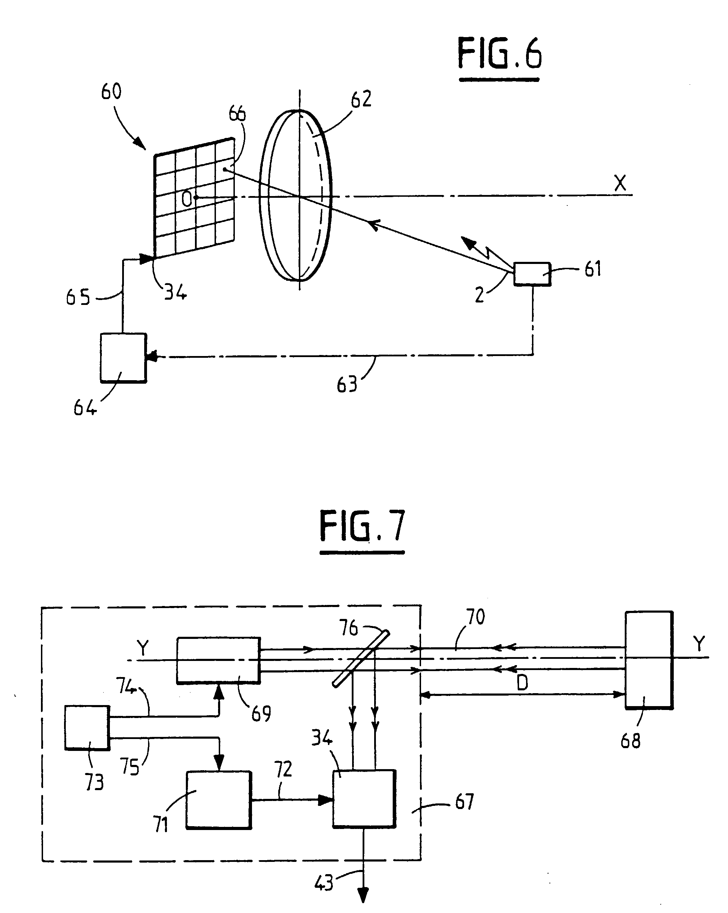

Une première application possible concerne un dispositif de localisation 60 d'une source lumineuse impulsionnelle mobile 61, tel que représenté sur la figure 6, qui permet de déterminer, par rapport à un axe OX, la position angulaire de ladite source lumineuse 61.

Ledit dispositif 60 comporte une optique 62, observant l'environnement de l'axe OX dans lequel se trouve la source 61, et un détecteur photosensible 34, auquel est associé une unité de commande 64 connaissant, par l'intermédiaire d'une liaison 63 ou par tout autre moyen, l'instant d'émission des éclats lumineux 2 de la source 61 et susceptible de transmettre cette information aux dispositifs de commande (non représentés) des différents éléments photosensibles du détecteur 34 par l'intermédiaire d'une liaison 65. Lesdits éclats lumineux 2 émis activent un élément photosensible 66. La position de la source lumineuse 61 est alors déterminée en fonction de la position de cet élément photosensible activé 66 dans le détecteur 34.

Ledit dispositif de localisation 60 peut détecter plusieurs sources impulsionnelles mobiles (non représentées). Il suffit pour cela que chaque source impulsionnelle émette périodiquement une séquence codée de façon unique par une répartition pré-déterminée d'éclats et d'absence d'éclats.

Chaque séquence débute par un éclat précédé obligatoirement d'une absence d'éclat permettant de recaler une base de temps de décodage à la façon des trains de bits des transmissions de données dites "asynchrones" et d'enchaîner par une succession déterminée d'états d'accumulation positive, lorsqu'un éclat est prévu, et d'accumulation négative. Dans chaque séquence, le nombre d'éclats est choisi de sorte qu'ils doivent tous être détectés pour que la tension aux bornes d'un élément photosensible dépasse la tension de référence vo, procurant ainsi une grande sélectivité au dispositif.

Une deuxième application possible du détecteur photosensible conforme à l'invention concerne un dispositif de télémétrie 67, tel que représenté sur la figure 7. Ledit dispositif de télémétrie 67 permet de vérifier la présence d'un objet 68 à une distance D déterminée dudit dispositif.

Il comporte à cet effet :
- une source laser 69 susceptible d'émettre des éclats laser 70, d'axe Y-Y ;
- un détecteur photosensible 34 conforme à l'invention ;
- un miroir semi-transparent 76 susceptible d'envoyer, sur le détecteur photosensible 34, les éclats laser 70 émis par la source laser et réfléchis par ledit objet 68 ;
- une base de temps 71 reliée au détecteur photosensible 34 par une liaison 72 ; et
- un élément de déclenchement 73, susceptible de déclencher la source laser 69 par une liaison 74 et d'activer simultanément la base de temps 71 par une liaison 75.

Lorsqu'une émission laser est déclenchée, la base de temps 71 est activée. Au bout d'un temps t, correspondant à la durée nécessaire pour un éclat laser émis d'atteindre un objet se trouvant à la distance D et de revenir jusqu'au dispositif après réflexion sur cet objet, la base de temps 71 active ledit détecteur photosensible 34, qui effectue alors une prise d'images par la commutation dans l'état d'accumulation positive de tous les éléments photosensibles. La détection ou non d'un éclat laser permet alors de déterminer la présence ou non d'un objet à la distance D du dispositif. En cas de détection d'un éclat laser, la position dans le détecteur de l'élément photosensible activé par ledit éclat laser permet, comme pour le dispositif de localisation 60 précité, de localiser ledit objet.

Par ailleurs, ledit dispositif de télémétrie 67 permet, conformément à l'invention, d'éliminer le bruit de fond lors de cette détection, grâce à des durées égales d'accumulation positive et d'accumulation négative successives.

Bien que, sur la figure 1, on ait représenté les interrupteurs 10 et 11 sous la forme schématique de contacts mobiles, il va de soi que le système de commutation 9 peut être du type statique.

## Revendications

1. Elément photosensible (1) pour la détection d'éclats lumineux (2), comportant une capacité d'accumulation (12), une diode photosensible (6,7) susceptible de transformer l'énergie lumineuse en courant électrique, et un dispositif de commande (4) connaissant l'instant de l'émission des éclats lumineux (2) et susceptible de commuter ledit élément photosensible dans l'un ou l'autre de deux états différents :
- un état d'accumulation positive (AP), activé au moins pendant la durée d'émission des éclats lumineux (2), dans lequel la capacité d'accumulation (12) est chargée, à partir du courant électrique engendré par l'énergie lumineuse atteignant ledit élément photosensible (1) ; et
- un état d'accumulation négative (AN), dans lequel la capacité d'accumulation (12) est déchargée, à partir du courant électrique engendré par l'énergie lumineuse atteignant ledit élément photosensible (1),
caractérisé en ce qu'il comporte une seconde diode photosensible et un système de commutation (9), commandé par ledit dispositif de commande (4) et susceptible de relier la capacité d'accumulation (12), d'une part, à l'une (6) desdites diodes photosensibles dans l'état d'accumulation positive (AP) et, d'autre part, à l'autre (7) desdites diodes photosensibles dans l'état d'accumulation négative (AN).

2. Elément photosensible (1) selon la revendication 1,
caractérisé en ce que les états successifs d'accumulation positive (AP) et d'accumulation négative (AN) sont de durée égale.

3. Elément photosensible (1) selon l'une des revendications 1 ou 2,
caractérisé en ce qu'il comporte un système de binarisation (27) permettant de déterminer un état binaire dudit élément photosensible (1), en fonction de la tension (v) aux bornes de la capacité d'accumulation (12) par rapport à une tension de référence (vo).

4. Elément photosensible (1) selon la revendication 3,
caractérisé en ce qu'il comporte un moyen de mémorisation (28) permettant d'enregistrer ledit état binaire déterminé.

5. Elément photosensible (1) selon l'une des revendications 1 à 4,
caractérisé en ce qu'il comporte un système d'initialisation (31), susceptible d'engendrer une tension déterminée (v1) aux bornes de la capacité d'accumulation (12).

6. Détecteur photosensible (34),
caractérisé en ce qu'il comporte des éléments photosensibles (1), selon l'une des revendications 1 à 5, agencés en lignes (L1, L2, L3, L4, L5) et colonnes (C1, C2, C3, C4) sous forme de matrice.

7. Détecteur photosensible (34) selon la revendication 6, comportant des éléments photosensibles (1) selon la revendication 5,
caractérisé en ce qu'il comporte un registre à décalage d'entrée (35) susceptible de commander l'ensemble des systèmes d'initialisation (31) desdits éléments photosensibles (1).

8. Détecteur photosensible (34) selon l'une des revendications 6 ou 7,
caractérisé en ce qu'il comporte un registre à décalage de sortie (43) susceptible de transmettre l'état binaire de chacun des éléments photosensibles (1) du détecteur, c'est-à-dire de restituer une image prise par le détecteur photosensible (34).

9. Détecteur photosensible (34) selon la revendication 8,
caractérisé en ce qu'il comporte un système de comparaison (50) permettant de détecter tout changement de l'état binaire d'un élément photosensible entre une image détectée et une image enregistrée.

10. Dispositif de localisation (60) d'au moins une source lumineuse impulsionnelle (61),
caractérisé en ce qu'il comporte un détecteur photosensible (34) selon l'une des revendications 6 à 9, ladite source impulsionnelle (61) étant localisée, par rapport à une direction normale (OX) au plan dudit détecteur, par la position dans ledit détecteur (34) d'un élément photosensible (66) activé par ladite source impulsionnelle (61).

11. Dispositif de localisation de plusieurs sources lumineuses impulsionnelles selon la revendication 10,
caractérisé en ce qu'il est susceptible de décoder un signal caractéristique de chacune desdites sources impulsionnelles, chacun desdits signaux étant formé, de façon unique, par une répartition déterminée d'éclats et d'absence d'éclats.

12. Dispositif de télémétrie (67) destiné à déterminer la présence d'un objet (68) à une distance déterminée (D) dudit dispositif,
caractérisé en ce qu'il comporte :
- une source laser (69), susceptible d'émettre des éclats lumineux (70), et
- un détecteur photosensible selon l'une des revendications 6 à 9, susceptible d'effectuer la détection des éclats lumineux émis par ladite source et réfléchis par ledit objet, ladite détection étant effectuée, à un instant déterminé après l'émission des éclats lumineux, par la commutation dans l'état d'accumulation positive à cet instant de tous les éléments photosensibles dudit détecteur.

## Patentansprüche

1. Fotoelement (1) zur Detektion von Lichtblitzen (2), mit einer Speicherkapazität (12), einer Fotodiode (6,7) zur Umwandlung der Lichtenergie in elektrischen Strom und einer Steuervorrichtung (4), der der Zeitpunkt der Abgabe der Lichtblitze (2) bekannt ist und die das Fotoelement in den einen oder anderen von zwei unterschiedlichen Zuständen schalten kann:
- einen positiven Speicherzustand (AP), der mindestens während der Dauer der Abgabe der Lichtblitze (2) aktiviert ist und in dem die Speicherkapazität (12) über den durch die Lichtenergie am Fotoelement (1) erzeugten elektrischen Strom geladen wird; und
- einen negativen Speicherzustand (AN), in dem die Speicherkapazität (12) über den durch die Lichtenergie am Fotoelement (1) erzeugten elektrischen Strom entladen wird,
dadurch gekennzeichnet, daß es eine zweite Fotodiode und ein Umschaltsystem (9) hat, das durch die Steuervorrichtung (4) gesteuert wird und die Speicherkapazität (12) einerseits im positiven Speicherzustand (AP) mit der einen Fotodiode (6) und andererseits im negativen Speicherzustand (AN) mit der anderen Fotodiode (7) verbinden kann.

2. Fotoelement (1) nach Anspruch 1,
dadurch gekennzeichnet, daß die aufeinanderfolgenden Zustände positiver Speicherung (AP) und negativer Speicherung (AN) von gleicher Dauer sind.

3. Fotoelement (1) nach einem der Ansprüche 1 oder 2,
dadurch gekennzeichnet, daß es ein Binärsystem (27) hat, mit dem ein Binärzustand des Fotoelements (1) in Abhängigkeit von der Spannung (v) an den Klemmen der Speicherkapazität (12) gegenüber einer Referenzspannung (vo) bestimmt werden kann.

4. Fotoelement (1) nach Anspruch 3,
dadurch gekennzeichnet, daß es ein Speichermittel (28) zur Speicherung des bestimmten Binärzustandes hat.

5. Fotoelement (1) nach einem der Ansprüche 1 bis 4,
dadurch gekennzeichnet, daß es ein Initialisierungssystem (31) hat, das an den Klemmen der Speicherkapazität (12) eine bestimmte Spannung (v1) erzeugen kann.

6. Fotodetektor (34),
dadurch gekennzeichnet, daß er Fotoelemente (1) nach einem der Ansprüche 1 bis 5 hat, die matrixförmig in Reihen (L1, L2, L3, L4, L5) und Spalten (C1, C2, C3, C4) angeordnet sind.

7. Fotodetektor (34) nach Anspruch 6 mit Fotoelementen (1) nach Anspruch 5,
dadurch gekennzeichnet, daß er ein Eingangsschieberegister (35) hat, durch das alle Initialisierungssysteme (31) der Fotoelemente (1) gesteuert werden können.

8. Fotodetektor (34) nach einem der Ansprüche 6 oder 7,
dadurch gekennzeichnet, daß er ein Ausgangsschieberegister (43) hat, durch das der Binärzustand jedes Fotoelements (1) des Detektors übertragen, d.h. ein vom Fotodetektor (34) aufgenommenes Bild wiederhergestellt werden kann.

9. Fotodetektor (34) nach Anspruch 8,
dadurch gekennzeichnet, daß er ein Vergleichssystem (50) hat, durch das jede Änderung des Binärzustands eines Fotoelements zwischen einem erfaßten Bild und einem gespeicherten Bild erfaßt werden kann.

10. Vorrichtung (60) zur Lokalisierung mindestens einer Pulslichtquelle (61),
dadurch gekennzeichnet, daß sie einen Fotodetektor (34) nach einem der Ansprüche 6 bis 9 hat, wobei die Pulsquelle (61) bezogen auf eine Richtung senkrecht (OX) zur Detektorebene durch die Lage eines durch die Pulsquelle (61) aktivierten Fotoelements (66) im Detektor (34) lokalisiert wird.

11. Vorrichtung zur Lokalisierung mehrerer Pulslichtquellen nach Anspruch 10,
dadurch gekennzeichnet, daß sie ein charakteristisches Signal jeder Pulsquelle decodieren kann, wobei jedes Signal speziell aus einer bestimmten Verteilung von Blitzen und Blitzlosigkeiten gebildet wird.

12. Entfernungsmeßvorrichtung (67) zur Bestimmung des Vorhandenseins eines Gegenstands (68) in einer bestimmten Entfernung (D) von der Vorrichtung,
dadurch gekennzeichnet, daß sie umfaßt:
- eine Laserquelle (69) zur Abgabe von Lichtblitzen (70) und
- einen Fotodetektor nach einem der Ansprüche 6 bis 9 zur Detektion der von der Quelle abgegebenen und vom Gegenstand reflektierten Lichtblitze, wobei die Detektion zu einem bestimmten Zeitpunkt nach der Abgabe der Lichtblitze erfolgt, indem alle Fotoelemente des Detektors in den zu diesem Zeitpunkt positiven Speicherzustand geschaltet werden.

## Claims

1. Photosensitive element (1) for detecting flashes of light (2), including an accumulation capacitor (12), a photosensitive diode (6, 7) capable of converting the light energy into electric current, and a control device (4) knowing the instant of the emission of the flashes of light (2) and capable of switching the said photosensitive element into one or the other of two different states:
- a positive accumulation state (AP), activated at least over the duration of emission of the flashes of light (2), in which state the accumulation capacitor (12) is charged by the electric current generated by the light energy reaching the said photosensitive element (1); and
- a negative accumulation state (AN), in which the accumulation capacitor (12) is discharged by the electric current generated by the light energy reaching the said photosensitive element (1),
characterized in that it includes a second photosensitive diode and a switching system (9), controlled by the said control device (4) and capable of linking the accumulation capacitor (12), on the one hand, to one (6) of the said photosensitive diodes in the positive accumulation state (AP) and, on the other hand, to the other (7) of the said photosensitive diodes in the negative accumulation state (AN).

2. Photosensitive element (1) according to Claim 1, characterized in that the successive positive accumulation (AP) and negative accumulation (AN) states are of equal duration.

3. Photosensitive element (1) according to either of Claims 1 and 2, characterized in that it includes a binary conversion system (27) making it possible to determine a binary state of the said photosensitive element (1) as a function of the voltage (v) at the terminals of the accumulation capacitor (12) with respect to a reference voltage (vo).

4. Photosensitive element (1) according to Claim 3, characterized in that it includes a memory-storage means (28) making it possible to record the said determined binary state.

5. Photosensitive element (1) according to one of Claims 1 to 4, characterized in that it includes an initialization system (31) capable of generating a determined voltage (v1) at the terminals of the accumulation capacitor (12).

6. Photosensitive detector (34), characterized in that it includes photosensitive elements (1), according to one of Claims 1 to 5, arranged in rows (L1, L2, L3, L4, L5) and columns (C1, C2, C3, C4) in matrix form.

7. Photosensitive detector (34) according to Claim 6, including photosensitive elements (1) according to Claim 5, characterized in that it includes an input shift register (35) capable of controlling all the systems (31) for initialization of the said photosensitive elements (1).

8. Photosensitive detector (34) according to either of Claims 6 and 7, characterized in that it includes an output shift register (43) capable of transmitting the binary state of each of the photosensitive elements (1) of the detector, that is to say of reproducing an image taken by the photosensitive detector (34).

9. Photosensitive detector (34) according to Claim 8, characterized in that it includes a comparison system (50) making it possible to detect any change in the binary state of a photosensitive element between a detected image and a recorded image.

10. Device (60) for locating at least one pulsed light source (61), characterized in that it includes a photosensitive detector (34) according to one of Claims 6 to 9, the said pulsed source (61) being located, with respect to a direction (OX) normal to the plane of the said detector, by the position in the said detector (34) of a photosensitive element (66) activated by the said pulsed source (61).

11. Device for locating several pulsed light sources, according to Claim 10, characterized in that it is capable of decoding a signal characteristic of each of the said pulsed sources, each of the said signals being formed, uniquely, by a defined distribution of flashes and of absence of flashes.

12. Range finder device (67) intended to determine the presence of an object (68) at a determined range (D) from the said device,
characterized in that it includes:
- a laser source (69), capable of emitting flashes of light (70), and
- a photosensitive detector according to one of Claims 6 to 9, capable of performing the detection of the flashes of light emitted by the said source and reflected by the said object, the said detection being performed, at a determined instant after the emission of the flashes of light, by the switching of all the photosensitive elements of the said detector into the positive accumulation state at this instant.
